# EUROPEAN PATENT APPLICATION

(11) **EP 4 585 546 A1**
(43) Date of publication of application: **16.07.2025**
(21) Application number: 24223690.9
(22) Date of filing: 30.12.2024
(51) Int. Cl.: B65H 1/04, B65H 1/14, B65H 7/02, B65H 29/14, B65H 29/50, B65H 31/02

(54) **DOCUMENT FEEDING DEVICE AND IMAGE SCANNING APPARATUS**

(30) Priority: 09.01.2024 JP 2024001023
(71) Applicant: KYOCERA Document Solutions Inc., Osaka-shi, Osaka, 540-8585 (JP)
(72) Inventor: FUJII, Koji, Osaka-shi, Osaka, 540-8585, (JP)
(74) Representative: Winter, Brandl - Partnerschaft mbB

(57) **Abstract**

A transportation device (21) transports a document sheet from a feeding tray (11) to an output tray (14). A first lifting device (22) lifts and lowers the feeding tray. A feeding-tray upperlimit sensor (42) detects that the feeding tray reaches an upperlimit height. An output-tray sheet sensor (44) detects the document sheet on the output tray. Further, the controller (51) at a standby status (a) determines whether a document sheet is on the output tray or not, (b1) if a document sheet is not on the output tray, arranges the feeding tray at a predetermined intermediate position (P1), and (b2) if a document sheet is on the output tray, arranges the feeding tray at a lower position (P2) that is a position apart by a predetermined distance from a position of the feeding tray when detecting that the feeding tray reaches the upperlimit height. Here, the lower position is a position higher than the intermediate position.

## Description

### BACKGROUND

### 1. FIELD OF THE PRESENT INVENTION

The present invention relates to a document feeding device and an image scanning apparatus.

### 2. DESCRIPTION OF THE RELATED ART

A document feeding device includes a liftable feeding tray and a sheet output tray, and transports a document sheet along a transportation path from the feeding tray to the sheet output tray through an ejection port. In the document feeding device, when the feeding tray is lifted or lowered correspondingly to a thickness of a document sheet bunch on the feeding tray, the ejection port is also lifted or lowered in conjunction with the feeding tray.

It can be conceived that if a document sheet was removed from the feeding tray when the document feeding device is in a standby status, the feeding tray is arranged at a specific intermediate position to make it easy for a user to remove a document sheet on the sheet output tray while enabling a user to put a document sheet on the feeding tray. In such a case, a sensor is installed at the specific intermediate position.

However, in such a case, if many document sheets are piled on the output tray, then a gap between the feeding tray and an upper surface of a document sheet bunch on the output tray gets narrow and thereby document sheets on the output tray can not be easily removed.

### SUMMARY

A document feeding device according to the present invention includes a feeding tray on which a document sheet is put, an output tray for the document sheet, a transportation device, an ejection port, a first lifting device, a feeding-tray upperlimit sensor, an output-tray sheet sensor, and a controller. The transportation device is configured to transport the document sheet along a transportation path from the feeding tray to the output tray. The ejection port is configured to output at an end of the transportation path the document sheet to the output tray. The first lifting device is configured to lift and lower the feeding tray. The feeding-tray upperlimit sensor is configured to detect that the feeding tray reaches an upperlimit height. The output-tray sheet sensor is configured to detect the document sheet on the output tray. The controller is configured to control the first lifting device and thereby change a height position of the feeding tray. Further, the controller at a standby status (a) determines whether a document sheet is on the output tray or not on the basis of a sensor signal of the output-tray sheet sensor, (b1) if a document sheet is not on the output tray, arranges the feeding tray at a predetermined intermediate position, and (b2) if a document sheet is on the output tray, arranges the feeding tray at a lower position that is a position apart by a predetermined distance from a position of the feeding tray when the feeding-tray upperlimit sensor detects that the feeding tray reaches the upperlimit height. Here, the lower position is a position higher than the intermediate position.

An image scanning apparatus according to the present invention includes a document feeding device and an image sensor. The image sensor is configured to scan an image of a document sheet at a predetermined position in a transportation path.

These and other objects, features and advantages of the present invention will become more apparent upon reading of the following detailed description along with the accompanied drawings.

### BRIEF DESCRIPTION OF THE DRAWINGS

Fig. 1 shows a side view an internal configuration of an image scanning apparatus in the present invention;
Fig. 2 shows a block diagram that indicates an electronic configuration of an automatic document feeder 4 shown in Fig. 1;
Fig. 3 shows a diagram that explains a height position of a feeding tray 11 when no document sheets are on an output tray 14;
Fig. 4 shows a diagram that explains a height position of the feeding tray 11 when a document sheet is on the output tray 14;
Fig. 5 shows a diagram that explains a height position of an ejection port 15 when a small amount of document sheets is on an output tray 14;
Fig. 6 shows a diagram that explains a height position of an ejection port 15 when a large amount of document sheets is on an output tray 14; and
Fig. 7 shows a diagram that explains a height position of an ejection port 15 when a small amount of document sheets is on a feeding tray 11.

### DETAILED DESCRIPTION

Hereinafter, an embodiment according to an aspect of the present invention will be explained with reference to drawings.

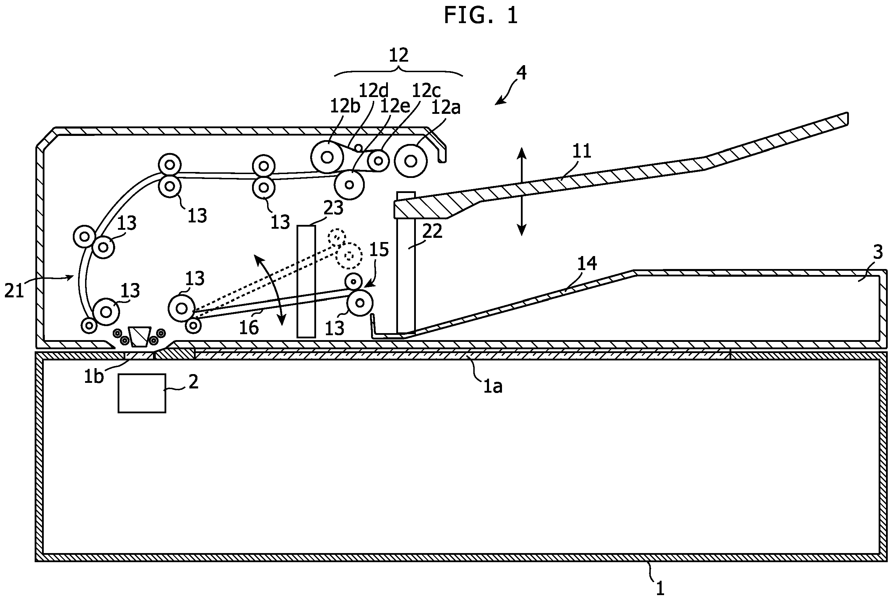

Fig. 1 shows a side view an internal configuration of an image scanning apparatus in the present invention. The image scanning apparatus shown in Fig. 1 is an apparatus such as scanner, copier, facsimile device, or multi function peripheral, and includes an auto document feeder as a document feeding device.

The image scanning apparatus shown in Fig. 1 includes an apparatus main body 1, contact glasses 1a and 1b arranged on an upper surface of the main body 1, an image sensor 2, and a document cover 3. The document cover 3 includes the auto document feeder 4.

The contact glass 1a is a transparent member on which a document is put when performing image scanning without the auto document feeder 4. The contact glass 1b is a transparent member on which a document passes when performing image scanning of a document image while automatically transporting a document with the auto document feeder 4.

The image sensor 2 scans a document image of a document sheet. Specifically, the image sensor 2 is a sensor that optically scans an image of a document that passes at a predetermined position in a transportation path of the document when performing image scanning of a document image while automatically transporting the document with the auto document feeder 4. The image sensor 2 scans the document image line by line. The image sensor 2 include a light source (light emitting diode or the like) and a light receiving element (line sensor or the like), and causes the light source to emit light, causes the light receiving element to detect reflection light that reflects a document or the like through the contact glass 1a or 1b, and outputs an electric signal corresponding to a light amount of the reflection light. A controller 51 mentioned below receives this electric signal, and generates a document image (i.e. image data of the document image) on the basis of this electric signal.

A document cover 3 is a rotatable member installed so as to be capable of contacting a surface area of the contact glass 1a when it rotates, and presses a document against the contact glass 1a and prevents environmental light from entering through the contact glasses 1a and 1b to the inside of the apparatus during image scanning. Further, the auto document feeder 4 includes a feeding tray 11 on which a document sheet is put, and a transportation device 21 that transports the document sheet from the feeding tray 11 to an output tray 14 through a scanning position of the image sensor 2; and causes a document sheet put on the feeding tray 11 to pass at a position on the contact glass 1b sheet by sheet and output the document sheet onto the output tray 14. Specifically, the transportation device 21 includes a paper feeding unit 12 and transportation rollers 13 arranged along the transportation path, and feeds a document sheet using the paper feeding unit 12 and transports the document sheet using the transportation rollers 13. The paper feeding unit 12 includes a feeding roller 12a, a driving roller 12b, a driven roller 12c, a transportation belt 12d, and an auxiliary roller 12e, and draws a document sheet on the feeding tray 11 into the transportation path along the transportation belt 12d using the feeding roller 12a sheet by sheet.

Further, the image sensor 2 can change an image scanning position using an unshown driving device; and when performing image scanning with the auto document feeder 4, the image scanning position of the image sensor 2 is set as a passing position of a document on the contact glass 1b, and the image sensor 2 optically scans an image of the document in transportation by the auto document feeder 4 when the document passes on the contact glass 1b. Here, the image sensor 2 is a color image sensor, and scans document images of plural colors such as RGB at image scanning positions different from each other along a transportation direction. In this embodiment, a CIS (Contact Image Sensor) is used as the image sensor 2; and when performing image scanning with the auto document feeder 4, the image sensor 2 is arranged right below the contact glass 1b.

The feeding roller 12a, the driving roller 12b and the driven roller 13 are driven by a driving device (not shown) such as motor.

The output tray 14 is a tray on which piled are document sheets that are outputted and fallen through the ejection port 15 at an end of the transportation path. The ejection port 15 outputs a document sheet onto the output tray 14 at the end of the transportation path.

Further, the image scanning apparatus shown in Fig. 1 includes a lifting device 22 that lifts and lowers the feeding tray 11 in accordance with an existing lifting and lowering manner, and a lifting device 23 that lifts and lowers the ejection port 15 in accordance with an existing lifting and lowering manner. Specifically, the lifting device 23 causes the transportation roller 13 at the end of the transportation path with a termination transportation path 16 to rotate around a predetermined support point as a center of the rotation, and thereby lifts and lowers the ejection port 15.

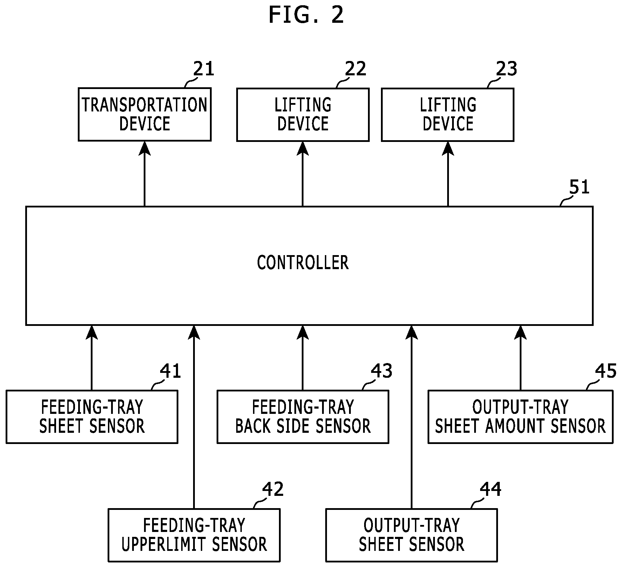

Fig. 2 shows a block diagram that indicates an electronic configuration of the automatic document feeder 4 shown in Fig. 1. As shown in Fig. 2, this image scanning apparatus further includes a feeding-tray sheet sensor 41, a feeding-tray upperlimit sensor 42, a feeding-tray back side sensor 43, an output-tray sheet sensor 44, an output-tray sheet amount sensor 45, and a controller 51.

The feeding-tray sheet sensor 41 detects a document sheet on the feeding tray 11, and outputs a sensor signal that indicates whether or not there is a document sheet.

The feeding-tray upperlimit sensor 42 is a sensor that detects that the feeding tray 11 reaches an upperlimit height. Specifically, the feeding-tray upperlimit sensor 42 detects that the feeding tray 11 or a documents sheet put on the feeding tray 11 contacts with the feeding roller 12a.

The feeding-tray back side sensor 43 is arranged on a back side of the feeding tray 14, and detects contact of an object (a document sheet on the output tray 14 or the like).

The output-tray sheet sensor 44 detects a document sheet on the output tray 14, and outputs a sensor signal that indicates whether or not there is a document sheet.

The output-tray sheet amount sensor 45 detects an amount of a document sheet (i.e. a thickness of a document sheet bunch) on the output tray 14.

The controller 51 includes a processor that executes a program, an ASIC (Application Specific Integrated Circuit) and/or the like, and controls the auto document feeder 4 (i.e. the transportation device 21, the lifting devices 22, 23 and the like) and thereby performs transportation of a document sheet, and performs image scanning using the image sensor 2 and thereby acquires image data of an image of the document sheet (i.e. a document image).

Further, the controller 51 controls the lifting device 22 and thereby changes a height position of the feeding tray 11, and controls the lifting device 23 and thereby changes a height position of the ejection port 15.

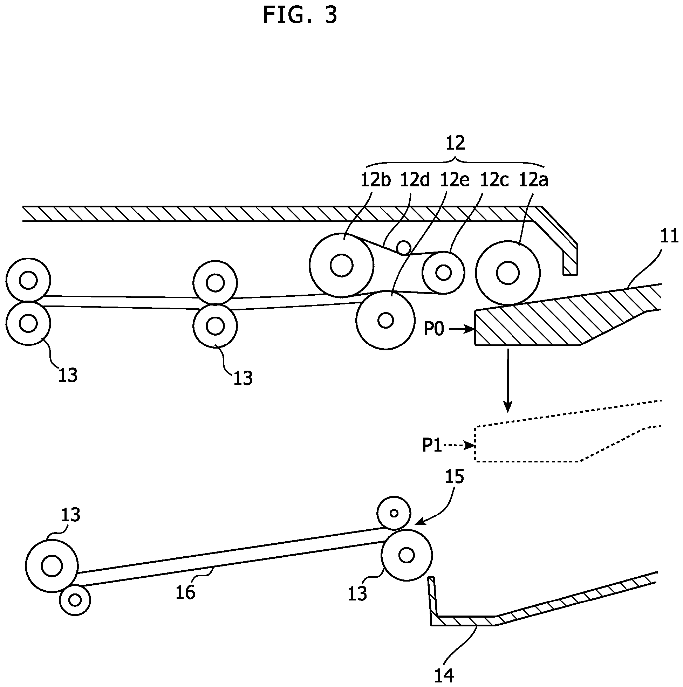

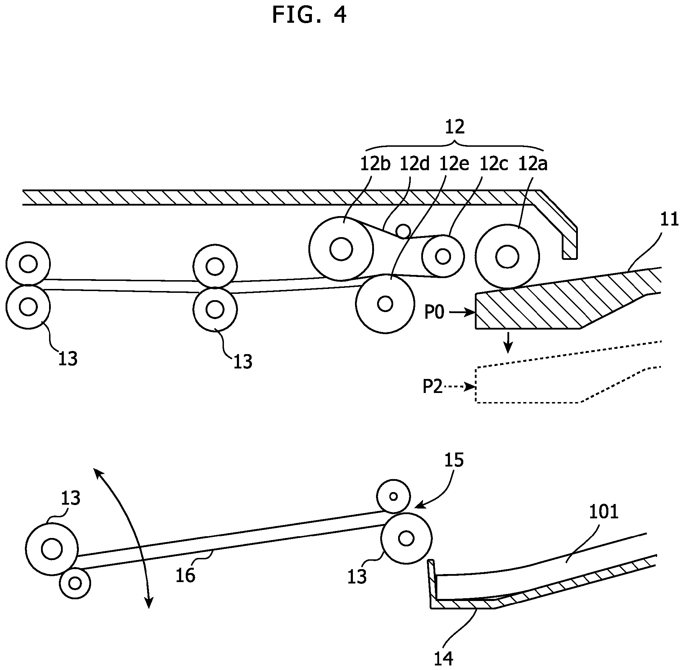

Fig. 3 shows a diagram that explains a height position of a feeding tray 11 when no document sheets are on an output tray 14. Fig. 4 shows a diagram that explains a height position of the feeding tray 11 when a document sheet is on the output tray 14.

Specifically, the controller 51 at a standby status (a status that transportation of a document sheet is not performed) (a) determines whether a document sheet is on the output tray 14 or not on the basis of a sensor signal of the output-tray sheet sensor 44, (b1) if a document sheet is not on the output tray 14, arranges the feeding tray 11 at a predetermined intermediate position P1 as shown in Fig. 3 for example, and (b2) if a document sheet is on the output tray 14, arranges the feeding tray 11 at a lower position P2 that is a position apart by a predetermined distance from a position of the feeding tray 11 located when the feeding-tray upperlimit sensor 42 detects that the feeding tray 11 reaches the upperlimit height (hereinafter, also called uppperlimit height position P0) as shown in Fig. 4 for example. Here, the aforementioned lower position P2 is a position higher than the aforementioned intermediate position P1.

For example, the lower position P2 is a position that the feeding tray 11 is moved downward for 300 milliseconds from the upperlimit height position P0.

Further, if a document sheet is not on the output tray 14, the controller 51 moves the feeding tray 11 by a predetermined lowering distance from the upperlimit height position P0 and thereby arranges the feeding tray 11 at the intermediate position P1. Here, the lowering distance may be a half of a distance between the upperlimit height position P0 and a lowerlimit height of the feeding tray 11 (a position that the feeding tray 11 is detected by a lowerlimit sensor not shown), or may be settable by a user.

Further, if the feeding-tray back side sensor 43 detects contact of an object with the back side of the feeding tray 11 while lowering the feeding tray 11 (for example, before the feeding tray 11 reaches the intermediate position P1 or the lower position P2), the controller 51 stops movement of the feeding tray 11.

Further, when moving the feeding tray 11, if the sensor signal of the output-tray sheet sensor 44 changes (i.e. if a document sheet on the output tray 14 is removed, a document sheet is put on the output tray 14 or the like), the controller 51 starts movement of the feeding tray 11 after a predetermined period (e.g. 1 second) elapses. Consequently, it is restrained that a hand or the like of a user contacts with the feeding tray 11.

Furthermore, regardless of the height position of the feeding tray 11, the controller 51 arranges the ejection port 15 at a height position apart by a predetermined constant distance from an upper surface of a bunch of the document sheet on the output tray 14. This upper surface corresponds to the detected amount of the document sheet.

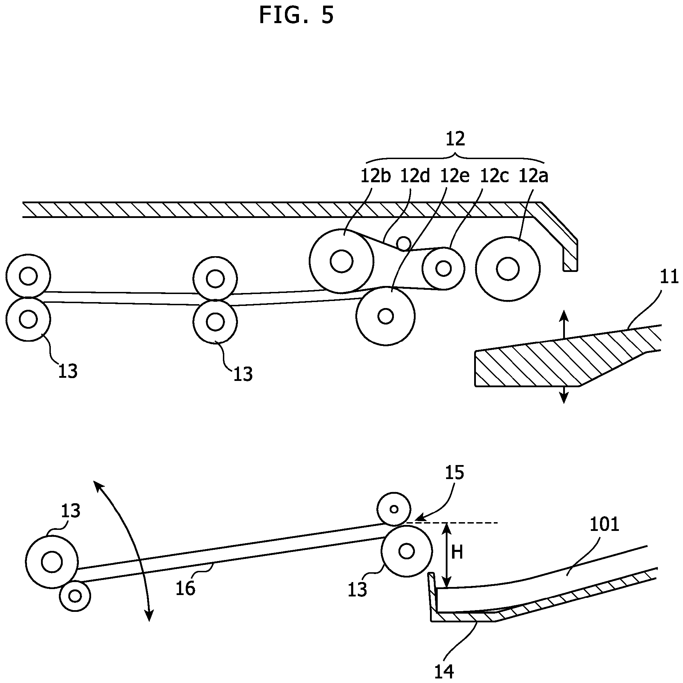

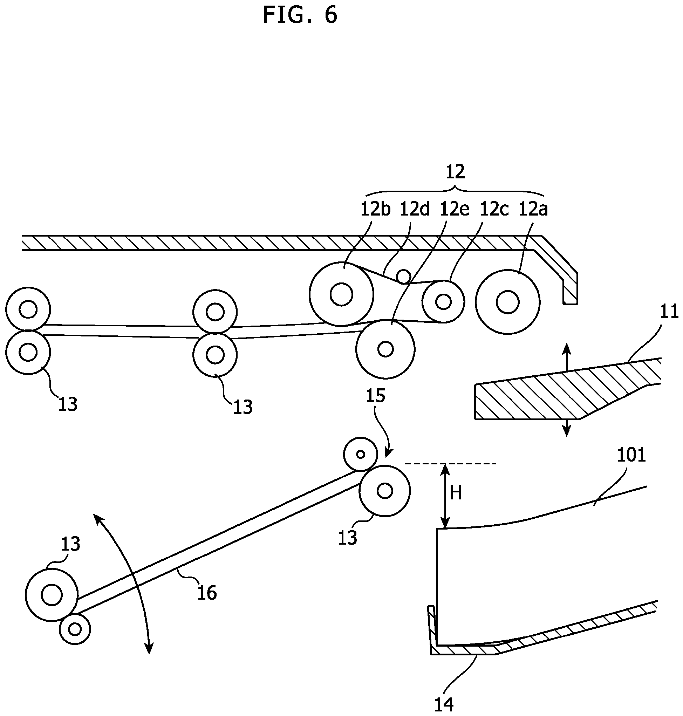

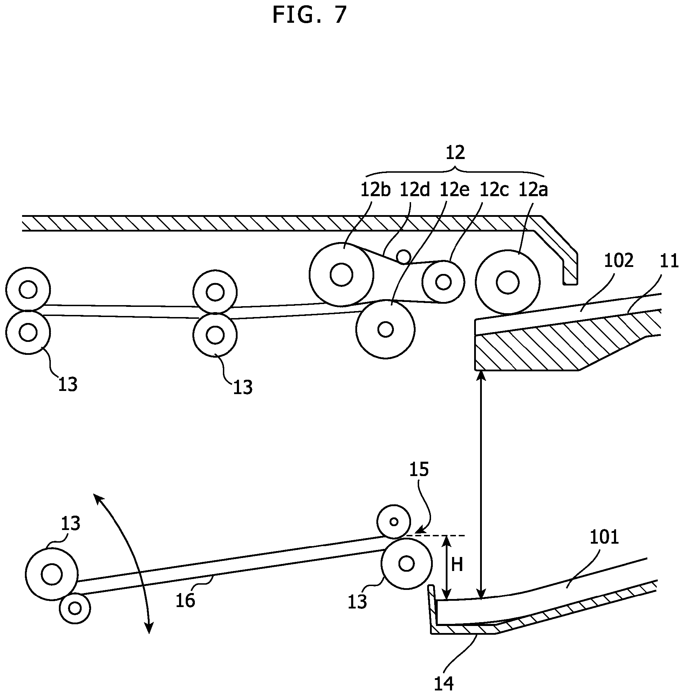

Fig. 5 shows a diagram that explains a height position of an ejection port 15 when a small amount of document sheets is on an output tray 14. Fig. 6 shows a diagram that explains a height position of an ejection port 15 when a large amount of document sheets is on an output tray 14. Fig. 7 shows a diagram that explains a height position of an ejection port 15 when a small amount of document sheets is on a feeding tray 11.

For example, as shown in Figs. 5 and 6, the ejection port 15 is arranged at a constant height H from an upper surface of the document sheet bunch correspondingly to an amount of document sheets 101 on the output tray 14 (i.e. thickness of the document sheet bunch). Consequently, a distance from the ejection port 15 to the upper surface of the document sheet bunch on the output tray 14 is constant regardless of a height position of the feeding tray 11, and thereby, restrained is positional dispersion of document sheets 101 piled on the output tray 14 due to falling from the ejection port 15. In particular, as shown in Fig. 7, for example, even when there is a small number of document sheets on the feeding tray 11, the ejection port 15 is arranged at the height H from the upper surface of the document sheet bunch, and therefore, such dispersion is restrained.

The following part explains a behavior of the aforementioned image scanning apparatus.

### (a) In a standby status

In a standby status, the controller 51 watches a sensor signal of the feeding-tray sheet sensor 41 and a sensor signal of the output-tray sheet sensor 44, and determines whether a document sheet is on the output tray 14 or not on the basis of the sensor signal of the output-tray sheet sensor 44.

If it is determined that no document sheets are on the output tray 14, then the controller 51 firstly moves the feeding tray 11 to the upperlimit height position, and thereafter, moves the feeding tray 11 to the intermediate position P1.

Contrarily, if it is determined that at least a document sheet is on the output tray 14, then the controller 51 firstly moves the feeding tray 11 to the upperlimit height position, and thereafter, moves the feeding tray 11 to the lower position P2.

Due to the following manner, when a document sheet 101 is on the output tray 14, a gap between a document sheet bunch on the output tray 14 and the feeding tray 11 gets large, and therefore, a user can easily remove the document sheet 101 on the output tray 14. Further, when a document sheet 101 is not on the output tray 14, a gap between the feeding unit 12 and the feeding tray 11 gets large, and therefore, a user can easily put a document sheet on the feeding tray 11.

### (b) In transportation of a document sheet

When document sheets are put on the feeding tray 11, the controller 51 lifts the feeding tray 11 until the document sheets contact with the feeding roller 12 (i.e. until the feeding-tray upperlimit sensor 42 detects that the feeding tray 11 reaches the upperlimit height). Afterward, upon starting transportation of the document sheets, the controller 51 transports the document sheets on the feeding tray 11 sheet by sheet to the output tray 14. In this operation, correspondingly to decrease of the document sheets on the feeding tray 11, the controller 51 changes a height position of the feeding tray 11 such that the document sheets on the feeding tray 11 contact with the feeding roller 12a, and correspondingly to increase of the document sheets on the output tray 14, the controller 51 changes a height position of the ejection port 15.

As mentioned, in the aforementioned embodiment, the controller 51 at a standby status (a) determines whether a document sheet is on the output tray 14 or not on the basis of a sensor signal of the output-tray sheet sensor 44, (b1) if a document sheet is not on the output tray 14, arranges the feeding tray 11 at a predetermined intermediate position, and (b2) if a document sheet is on the output tray 14, arranges the feeding tray 11 at a lower position that is a position apart by a predetermined distance from a position of the feeding tray when the feeding-tray upperlimit sensor 42 detects that the feeding tray 11 reaches the upperlimit height. Here, the lower position is a position higher than the intermediate position.

Consequently, a height position of the feeding tray 11 is changed correspondingly to existence of a document sheet on the output tray 14, and therefore, the document sheet on the output tray 14 can be easily removed.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. A document feeding device, comprising:
a feeding tray on which a document sheet is put;
an output tray for the document sheet;
a transportation device configured to transport the document sheet along a transportation path from the feeding tray to the output tray;
an ejection port configured to output at an end of the transportation path the document sheet to the output tray;
a first lifting device configured to lift and lower the feeding tray;
a feeding-tray upperlimit sensor configured to detect that the feeding tray reaches an upperlimit height;
an output-tray sheet sensor configured to detect the document sheet on the output tray; and
a controller configured to control the first lifting device and thereby change a height position of the feeding tray;
wherein the controller at a standby status (a) determines whether a document sheet is on the output tray or not on the basis of a sensor signal of the output-tray sheet sensor, (b1) if a document sheet is not on the output tray, arranges the feeding tray at a predetermined intermediate position, and (b2) if a document sheet is on the output tray, arranges the feeding tray at a lower position that is a position apart by a predetermined distance from a position of the feeding tray when the feeding-tray upperlimit sensor detects that the feeding tray reaches the upperlimit height; and
the lower position is a position higher than the intermediate position.

2. The document feeding device according to claim 1, wherein if a document sheet is not on the output tray, the controller moves the feeding tray by a predetermined lowering distance from a position of the feeding tray located when the feeding-tray upperlimit sensor detects that the feeding tray reaches the upperlimit height and thereby arranges the feeding tray at the intermediate position; and the lowering distance is settable by a user.

3. The document feeding device according to claim 1, further comprising a feeding-tray back side sensor arranged on a back side of the feeding tray and configured to detect contact of an object;
wherein if the feeding-tray back side sensor detects contact of an object with the back side of the feeding tray before the feeding tray reaches the intermediate position or the lower position, the controller stops movement of the feeding tray.

4. The document feeding device according to claim 1, wherein if the sensor signal of the output-tray sheet sensor changes, the controller starts movement of the feeding tray after a predetermined period elapses.

5. The document feeding device according to claim 1, further comprising:
a second lifting device configured to lift and lower the ejection port; and
an output-tray sheet amount sensor configured to detect an amount of the document sheet on the output tray;
wherein the controller controls the first lifting device and the second lifting device and thereby changes a height position of the feeding tray and a height position of the ejection position; and
regardless of the height position of the feeding tray, the controller arranges the ejection port at a height position apart by a predetermined constant distance from an upper surface of a bunch of the document sheet on the output tray, the upper surface corresponding to the detected amount of the document sheet.

6. An image scanning apparatus, comprising:
the document feeding device according to any of claims 1 to 5; and
an image sensor configured to scan an image of the document sheet at a predetermined position in the transportation path.
